# EUROPEAN PATENT SPECIFICATION

(11) **EP 1 752 550 B1**
(45) Date of publication and mention of the grant of the patent: **15.01.2014**
(21) Application number: 05739082.5
(22) Date of filing: 12.05.2005
(51) Int. Cl.: C22B 3/00, C22B 23/00

(54) **METHOD OF RECOVERING NICKEL AND COBALT**
VERFAHREN ZUR GEWINNUNG VON NICKEL UND COBALT
PROCÉDÉ POUR LA RÉCUPÉRATION DE NICKEL ET DE COBALT

(30) Priority: 27.05.2004 JP 2004158293
(43) Date of publication of application: 14.02.2007
(73) Proprietor: Pacific Metals Co., Ltd., Chiyoda-ku, Tokyo 100-0004 (JP)
(72) Inventor: YAKUSHIJI, Hiromasa; c/o Pacific Metals Co., Ltd.,, Hachinohe-city Aomori 0318617 (JP); ITO, Seiji; c/o Pacific Metals Co., Ltd.,, Hachinohe-city Aom ori 0318617 (JP)
(74) Representative: Cabinet Plasseraud
(86) International application number: PCT/JP2005/008726
(87) International publication number: WO 2005/116279

(56) References cited:
- EP-A- 0 400 311
- WO-A-01/32943
- WO-A-96/41025
- WO-A-03/093517
- JP-A- 8 092 665
- JP-A- 2002 539 324
- US-A- 5 872 279
- LEGAULT-SEGUIN E ET AL: "Separation of Ni and Co from Mn, Mg and Ca in sulphate laterite leach solutions" INTERNATIONAL LATERITE NICKEL SYMPOSIUM, TMS,, US, 2004, pages 449-455, XP009098471
- TAIT B K: "COBALT-NICKEL SEPARATION: THE EXTRACTION OF COBALT(II) AND NICKEL(II) BY CYANEX 301, CYANEX 302 AND CYANEX 272" HYDROMETALLURGY, ELSEVIER SCIENTIFIC PUBLISHING CY. AMSTERDAM, NL, vol. 32, no. 3, 1 April 1993 (1993-04-01), pages 365-372, XP000415575 ISSN: 0304-386X

## Description

### TECHNICAL FIELD

This invention relates to a process for recovering nickel and cobalt using solvent extraction.

### BACKGROUND ART

A cobalt oxide contained in a nickel oxide ore is leached into an aqueous sulfuric acid solution together with nickel when leaching nickel from the nickel oxide ore with sulfuric acid. Both nickel and cobalt are valuable metals. Thus, they are required to be recovered by individually separating them from an aqueous sulfuric acid solution containing cobalt. It is, however, difficult to separate them because nickel and cobalt have similar chemical properties (Patent Document 1).

As processes for separating and recovering nickel and cobalt from an aqueous solution of nickel-sulfuric acid containing cobalt, oxidizing bivalent into trivalent cobalt to preferentially precipitate cobalt (Non-Patent Document 1, Non-Patent Document 2, Non-Patent Document 3) and solvent-extracting it with an organic solvent (Patent Document 2) are known.
Patent Document 1: Japanese Laid-open patent publication H04-304330
Patent Document 2: Japanese Laid-open patent publication H06-264156
Non-Patent Document 1: CIM Bulletin, October (1978) P121 to P127
Non-Patent Document 2: Hydrometallurgy, 30(1992) P483 to P497
Non-Patent Document 3: Trans. Institution Mining and Metallurgy, 90, Sep 1981

### DISCLOSURE OF THE INVENTION

However, as described in Non-Patent Document 1 and Non-Patent Document 2, the process where ozone is used to oxidize cobalt from bivalent to trivalent for preferentially precipitating cobalt requires controlling an ozone partial pressure using a closed container for efficiently dissolving ozone in an aqueous solution of nickel sulfuric acid. Thus, for its industrial use, there is a room for improvement.

Also, as described in Non-Patent Document 3, in a process where cobalt is oxidized from bivalent to trivalent using a persulfate such as sodium persulfate and ammonium persulfate to preferentially precipitate cobalt, manganese and/or iron are precipitated in preference to cobalt, causing increase in the amount of the persulfate. Here, since a persulfate is very expensive, there is a room for improvement in terms of a cost for its industrial use.

In addition, as described in Patent document 2, when using a process for separating nickel from cobalt by solvent extraction with an organic solvent having a phosphinic acid group, not only cobalt but also calcium andmagnesiummay be sometimes extracted. Therefore, for example, overload to the organic solvent may be caused by calcium and magnesium, leading to reduction in an extraction rate for cobalt. Furthermore, extraction of calcium and magnesium into a cobalt sulfate solution causes scale adhesion in the step of refining cobalt hydroxide from the cobalt sulfate solution. Therefore, it is necessary to remove the scale while stopping a facility down, leading to reduction in productivity. Thus, there is a room for improvement.

In view of the above problems, an objective of the present invention is to provide a technique for efficiently separating and recovering nickel and cobalt from a sulfuric acid solution containing nickel and cobalt.

According to the present invention, cobalt can be selectively extracted from a sulfuric acid solution into an extraction solvent by contacting the sulfuric acid solution concomitantly containing nickel and cobalt with the extraction solvent containing a monothiophosphinic acid compound as an extracting agent. Thus, the sulfuric acid solution concomitantly nickel and cobalt can be contacted with the extraction solvent to give the sulfuric acid solution containing nickel and the extraction solvent containing cobalt. Therefore, by extracting nickel from the sulfuric acid solution and cobalt from the extraction solvent, nickel and cobalt can be efficiently separated and recovered.

According to the present invention, there is provided a process for separating and recovering nickel and cobalt from an oxide ore containing nickel and cobalt, comprising the steps of:
a leaching step where nickel and cobalt are leached from the oxide ore with sulfuric acid to obtain a sulfuric acid leachate containing nickel and cobalt and a leaching residue;
a reaction step where the sulfuric acid leachate containing the leaching residue is reacted by pH adjustment to obtain a reaction solution containing nickel and cobalt and a reaction residue;
a neutralization step where the reaction solution containing the reaction residue is neutralized with a neutralizing agent to obtain a neutralization solution containing nickel and cobalt and a neutralization residue;
a solid-liquid separation step where the neutralization solution is separated from the neutralization residue using a thickener with a flocculant to separate the neutralization solution and the neutralization residue;
a solvent extraction step where cobalt is selectively extracted from the neutralization solution into an extraction solvent containing a monothiophosphinic acid compound as an extracting agent represented by general formula (1):

   R₁R₂PSOH (1)

   wherein R₁ and R₂ which may be the same or different independently represent hydrocarbon optionally having a substituent by contacting the extraction solvent with the neutralization solution;
characterized in that
in said leaching step the amount of said sulfuric acid is not less than 50 wt% and not more than 80 wt% of the weight of said oxide ore; and
between said solid-liquid separation step and said solvent-extraction step, the pH of the mixture of said neutralization solution and said extraction solvent, the pH of said mixture is adjusted to not less than 2.5 and not more than 5.5.

According to the present invention, an extraction solvent containing a monothiophosphinic acid compound as an extracting agent can be contacted with a neutralization solution to selectively extract cobalt into the extraction solvent. Thus, by contacting the extraction solvent with the neutralization solution, the sulfuric acid solution containing nickel can be separated from the extraction solvent containing cobalt. Therefore, nickel and cobalt can be efficiently separated and recovered from an oxide ore containing nickel and cobalt.

Also, the process may further comprise, before the leaching step, classifying the oxide ore into a small particle oxide ore and a large particle oxide ore containing magnesium; wherein in the leaching step, nickel and cobalt are leached from the small particle oxide ore and in the reaction step, the sulfuric acid leachate containing the leaching residue may be reacted with magnesium contained in the large particle oxide ore to adjust a pH. By further comprising the classification step, the process can give higher leaching rates for nickel and cobalt with the small amount of sulfuric acid while reducing a process cost for removing iron. Therefore, nickel and cobalt can be efficiently separated and recovered.

In addition, in the leaching step, nickel and cobalt may be leached from the oxide ore further using a sodium salt to obtain a sulfuric acid leachate containing nickel and cobalt and a leaching residue, and in the reaction step, the sulfuric acid leachate containing the leaching residue maybe pH-adjusted to obtain a reaction solution containing nickel and cobalt and a reaction residue. By using a sodium salt in the leaching step, sulfuric acid and a sodium salt may be used to form Natrojarosite, which is then precipitated by adjusting pH in the reaction step to reduce an iron concentration in the reaction solution. It may, therefore, eliminate the necessity for using a large amount of a neutralizing agent for reducing an iron concentration in a reaction solution in the neutralization step. Thus, higher leaching rates of nickel and cobalt can be achieved with a small amount of sulfuric acid while reducing a process cost for removing iron. Therefore, nickel and cobalt can be efficiently separated and recovered.

In addition, R₁ and R₂ independently have more preferably 3 or more carbon numbers, further preferably 5 or more carbon numbers while having more preferably 25 or less carbon numbers, further preferably 15 or less carbon numbers. Thus, handling properties of the solvent extraction are improved, so that nickel and cobalt can be efficiently separated and recovered.

Also, the hydrocarbon group may be a hydrocarbon group selected from the group consisting of optionally substituted cycloalkyl group, optionally substituted aryl group, optionally substituted and straight chain or side chain aralkyl group, straight chain or side chain alkyl group, and straight chain or side chain alkenyl group.

According to the present invention, there can be provided a technique where nickel and cobalt can be efficiently separated and recovered from a sulfuric acid solution containing nickel and cobalt.

### BRIEF DESCRIPTION OF THE DRAWINGS

The above-mentioned objective and other objectives, features and advantages will be more clearly understood with reference to suitable embodiments described below and the accompanied drawings.
FIG. 1 is a process flow chart in accordance with an embodiment.
FIG. 2 is a process flow chart in accordance with the embodiment.
FIG. 3 is a schematic view of an apparatus used in a process in accordance with the embodiment.
FIG. 4 is a process flow chart in accordance with the example.
FIG. 5 is a graph showing the data in FIG. 6 in the example.
FIG. 6 is a view showing an extraction rate at each pH for each element according to the example.
FIG. 7 is a diagram showing a solution concentration in a solution according to the example.
FIG. 8 is a graph showing the data in FIG. 9 in a comparable example.
FIG. 9 is a diagram showing an extraction rate at each pH for each element in the comparable example.
FIG. 10 is a diagram showing a solution concentration in a solution in the comparable example.
FIG. 11 is a diagram showing an extraction amount for each element in the example.
FIG. 12 is a graph showing the data in FIG. 11 in the example.
FIG. 13 is a graph showing an extraction amount for each element in the example.
FIG. 14 is a diagram showing an extraction amount for each element in the example.
FIG. 15 is a diagram showing a solution concentration in a solution in the example.

### BEST MODE FOR CARRYING OUT THE INVENTION

Embodiments of this invention will be described with reference to the drawings and tables. Here, the amount for quantity consumed and quantity added stands for the quantity consumed and quantity added based on their weight.

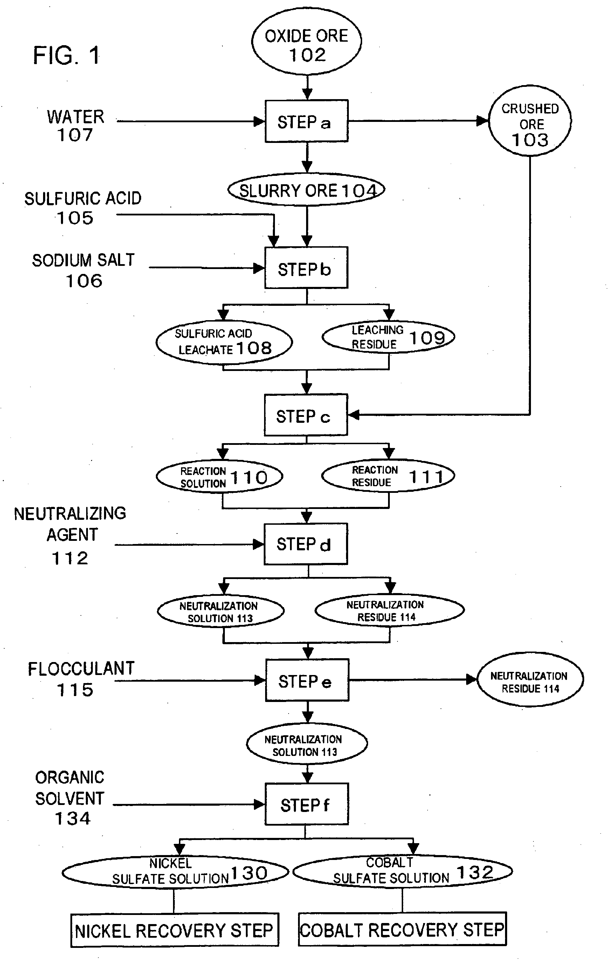

The flow chart in FIG. 1 shows a recovery process where nickel and cobalt are separated and recovered from a sulfuric acid solution (neutralization solution 113) concomitantly containing nickel and cobalt.

This flow chart contains the extraction step where an extraction solvent containing a monothiophosphinic acid compound as an extracting agent represented by general formula (1):

R₁R₂PSOH (1)

wherein R₁ and R₂ which may be the same or different independently represent hydrocarbon optionally having a substituent is contacted with the sulfuric acid solution to selectively extract cobalt from the sulfuric acid solution into the extraction solvent.

The process for recovering nickel and cobalt shown in FIG. 1 contains the following steps:
i) a leaching step where nickel and cobalt are leached from an oxide ore 102 with sulfuric acid 105 to obtain a sulfuric acid leachate (sulfuric acid leachate 108) containing nickel and cobalt and a leaching residue 109;
ii) a reaction step where the sulfuric acid leachate containing the leaching residue 109 is pH adjusted to obtain a reaction solution 110 containing nickel and cobalt and a reaction residue 111;
iii) a neutralization step where the reaction solution 110 containing the reaction residue 111 is neutralized with a neutralizing agent 112 to obtain a neutralization solution 113 containing nickel and cobalt and a neutralization residue 114;
iv) a solid-liquid separation step where the neutralization solution 113 and the neutralization residue 114 are separated using a thickener with a flocculant 115 to separate the neutralization solution 113 and neutralization residue 114; and
v) a solvent extraction step where the neutralization solution 113 is contacted with an extraction solvent containing a monothiophosphinic acid compound as an extracting agent represented by general formula (1):

   R₁R₂PSOH (1)

   wherein R₁ and R₂ which may be the same or different independently represent hydrocarbon optionally having a substituent to selectively extract cobalt from the neutralization solution into the extraction solvent.

In this embodiment, for example, a so-called limonite ore may be used as the oxide ore 102. Herein, the term "so-called limonite ore" refers to an ore containing nickel, cobalt, magnesium and iron as their oxides. In addition, for example, a neutralizing agent may be a ferronickel slag. Herein, the term "ferronickel slag" refers to a material generally known as a so-called saprolite ore with a nickel content of 2 wt% or more, which is a slag generated during smelting ferronickel by pyrometallurgical smelting process.

In general, there are no specific definitions on a composition range for a limonite ore and a saprolite ore, but Table 1 shows compositions of an oxide ore which is called a limonite ore, and a ferronickel slag. (Table 1)

**TABLE 1**

| Components (wt%) | | | | | |
|---|---|---|---|---|---|
| | Ni | Co | Fe | Mg | Mg/Fe |
| Limonite ore | 1.0~2.0 | 0.1~0.2 | 20~50 | 2.5~15 | 0.125~0.75 |
| Ferronickel slag | ≤0.1 | ≤0.01 | ≤10 | ≤15~25 | ≤1.5 |

First, in step a (classification step), an oxide ore 102 is classified into an over size and an under size. The under size is treated with water 107 to obtain a slurry ore 104, and the over size is crushed into a crushed ore 103.

Next, in step b (leaching step), the slurry ore 104 is leached with sulfuric acid 105 to obtain a sulfuric acid leachate 108 containing nickel and cobalt and a leaching residue 109. Here, the leaching residue 109 may contain Natrojarosite generated by a reaction of iron leached from the slurry ore 104 with sulfuric acid 105 and a sodium salt 106.

Next, instepc (reactionstep), free sulfuric acid in the sulfuric acid leachate 108 containing the leaching residue 109 is, for example, reacted with magnesium contained in the crushed ore 103 obtained by crushing in the classification step for consuming the free sulfuric acid and thus adjusting a pH, obtaining a reaction solution 110 and a reaction residue 111.

Next, in step d (neutralization step), a neutralizing agent 112 is added to the reaction solution 110 containing the reaction residue 111 for pH adjustment to obtain a neutralization solution 113 and a neutralization residue 114.

Subsequently, in step e (solid-liquid separation step), a flocculant 115 is added to the neutralization solution 113 containing the neutralization residue 114 and then solid-liquid separation is performed using a thickener to separate the neutralization solution 113 and the neutralization residue 114.

Then, in step f (solvent extraction step), an organic solvent 134 as an extraction solvent is used to separate nickel and cobalt contained in the neutralization solution 113 into a nickel sulfate solution 130 and a cobalt sulfate solution 132, which are fed to a nickel recovery step and a cobalt recovery step, respectively. Here, when using an organic solvent having a monothiophosphinic acid group is used as the organic solvent 134, a cobalt sulfate solution 132 substantially free from magnesium, manganese and calcium can be obtained.

Hereinafter, there will be described the detailed each steps.

### Step a: classification step

An oxide ore 102 such as a limonite ore containing nickel, cobalt, magnesium, calcium, manganese, zinc and iron is classified into an over size and an under size by, for example, a simple apparatus such as a vibrating screen. The under size is treated with water 107 to obtain a slurry ore 104, and the over size is treated by an apparatus such as a ball mill to obtain a crushed ore 103. Herein, the term "over size" refers to an oxide ore with a larger size than a mesh of the vibrating screen and thus remaining on the screen without passing the mesh. The term "under size" refers to an oxide ore with a smaller size than a mesh of the vibrating screen and thus passing through the mesh. Although there are no particular restrictions to a classification size by a vibrating screen or the like, for example, a mesh of 0.5 mm to 2 mm both inclusive may be used from the view of improving process stability.

When classifying the oxide ore by a screen with a mesh of about 0.5 mm to 2 mm, an under size tends to have a higher iron content and a lower magnesium content, while an over size tends to have a lower iron content and a higher magnesium content.

Water 107 may be, in addition to river water or ground water commonly used, marine water. By using marine water as water 107, a sodium salt contained in the marine water may be utilized further to effectively control the residual amount of iron in a leachate or a reaction solution leached from an oxide ore in the leaching step and the reaction step as a later step.

### Step b: leaching step

The slurry ore 104 obtained in step a can be leached, for example, with sulfuric acid 105 at an atmospheric pressure and a temperature of not less than 90 °C and not more than 100 °C, to provide a sulfuric acid leachate 108 containing nickel, cobalt, magnesium, calcium, manganese, zinc and iron as well as a leaching residue 109.

Leaching at a 90 °C or higher can improve a leaching rate for nickel and cobalt in the slurry ore 104. Thus, a leaching time for nickel and cobalt in the slurry ore 104 can be reduced. In addition, a leaching rate for nickel and cobalt can be increased. Leaching of nickel and cobalt contained in the slurry ore 104 at 100 °C or lower causes leaching nickel and cobalt at a temperature equal to or lower than the boiling point of water. It can thus eliminate the necessity for pressurizing an apparatus for leaching nickel and cobalt. Therefore, increase in a facility cost can be reduced.

Although a leaching temperature is defined as 90 °C or higher in the above description, a temperature of 70 °C or higher may be appropriately selected. Alternatively, nickel and cobalt in the slurry ore 104 may be leached at more than 100 °C. Furthermore, nickel and cobalt in the slurry ore 104 may be leached under a pressure condition other than an atmospheric pressure.

The added amount of sulfuric acid is less than 0.5 and not more than 0.8 times by weight (not less than 50 wt% and not more than 80 wt%) of the used amount of the over size of the oxide ore 102. With sulfuric acid in 0.5 times by weight (50 wt%) or more amount, nickel and cobalt can be adequately leached, and with sulfuric acid in about 0.8 times by weight amount (80 wt%), leaching rates for nickel and cobalt are in equilibrium. Therefore, using sulfuric acid in 0.8 times by weight (80 wt%) or less amount, excessive sulfuric acid (free sulfuric acid) may be reduced. Thus, while reducing increase in a cost for recovering nickel or cobalt, leaching rates for nickel and cobalt from an oxide ore can be maintained. As a result, nickel and cobalt can be efficiently recovered.

Also, instepb, an under size ore classified in the classification step may be used. Thus, the following effects can be achieved. Specifically, leaching of nickel and cobalt in an oxide ore is more difficult in the under size ore than the crushed ore 103 of the over size ore. Furthermore, since the crushed ore 103 of the over size ore has a higher magnesium content than the under size ore, free sulfuric acid used for leaching may be consumed. Thus, first, an excessive amount of sulfuric acid is used to leach more nickel and cobalt in the oxide ore for more efficient recovery of nickel and cobalt.

When using river water or ground water as water 107 in step a, a sodium salt 106 such as sodium sulfate and sodium chloride may be added in step b. Here, an added amount of sodium derived from the sodium salt 106 may be about 0.01 to 0.05 times by weight (1 wt% to 5 wt%) of a used amount of an oxide ore 102. When using marine water as water 107, an additional sodium salt is not necessary because marine water contains sodium in about 10 g/L. Thus, while maintaining leaching rates for nickel and cobalt from an oxide ore, increase in a cost for recovering nickel and cobalt can be further reduced. Therefore, nickel and cobalt can be efficiently recovered.

Since the added amount of sodium is 0.01 times by weight (1 wt%) or more, iron leached from the oxide ore can be reacted with sodium sulfate in the sulfuric acid leachate 108 to reduce an iron concentration in the sulfuric acid leachate 108.

It may be assumed that sodium would control an iron concentration in the sulfuric acid leachate in accordance with chemical reaction equations (2) to (4).

FeO(OH)·(oxide ore) +3/2H₂SO₄ = 1/2Fe₂(SO₄)₃·(liquid)+2H₂O (2)

Fe₂(SO₄)₃·(liquid)+1/3Na₂SO₄+4H₂O = 2/3NaFe₃(SO₄)₂(OH)₆·(solid)+2H₂SO₄ (3)

Fe₂(SO₄)₃·(liquid)+2/3NaCl+4H₂O = 2/3NaFe₃(SO₄)₂(OH)₆·(solid)+2/3HCl+5/3H₂SO₄ (4)

That is, iron in the oxide ore is leached with excessive sulfuric acid and combined with sodium in the sulfuric acid leachate to generate Natrojarosite, resulting in precipitation of part of iron leached. Thus, iron leached from the oxide ore is contained in a leachate, so that increase in its amount brought in the reaction step as next step can be reduced. So, in the reaction step, iron can be adequately precipitated to remove as Natrojarosite. Consequently, in the neutralization step after the reaction step, increase in a cost for precipitating iron in a neutralization solution can be reduced. As a result, increase in a cost for recovering nickel and cobalt from the oxide ore can be more reduced, and nickel and cobalt can be efficiently recovered.

With sodium added in about 0.05 times by weight amount (5 wt%), a generation rate of Natrojarosite and a precipitation rate are in equilibrium. Therefore, by adding sodium in 0.05 times by weight amount (5 wt%) or less, addition of an excessive amount of sodium can be prevented. Thus, increase in a cost for recovering nickel and cobalt from the oxide ore can be reduced. As a result, nickel and cobalt can be efficiently recovered.

A leaching time may be 1 to 10 hours both inclusive; for example, 3 to 6 hours. A facility for the leaching step may be a container with a stirrer commonly used, which may be made of, for example, stainless steel or a rubber lined steel. Therefore, nickel and cobalt can be leached from the oxide ore 102 without using an expensive apparatus such as a titanium lined autoclave which is used in pressure leaching under a high temperature and a high pressure. Thus, increase in a cost for recovering nickel and cobalt can be prevented, and nickel and cobalt can be efficiently recovered.

### Step c: reaction step

The sulfuric acid leachate 108 and the leaching residue 109 obtained in step b are reacted with, for example, the crushed ore 103 of the over size ore obtained in step a, for example, at an atmospheric pressure and a temperature of not less than 90 and not more than 100 °C in accordance with equations (5) to (8) described later. In accordance with a reaction equation described later, a reaction solution 110 containing nickel, cobalt, magnesium, calcium, manganese, zinc and a small amount of iron as well as a reaction residue 111 can be obtained

The crushed ore 103 may be added as a solid as it is, or alternatively added as a slurry with water. In this step, water may be selected from river water, ground water and marine water. The water may contain a sodium salt 106 such as sodium sulfate and sodium chloride.

Since the reaction temperature is 90 °C or higher, leaching rates of nickel and cobalt contained in the crushed ore 103 can be improved. In addition, an efficiency for removing iron leached in step b as Natrojarosite by precipitation can be improved. Furthermore, the reaction at a temperature of 100 °C or lower may be a reaction in accordance with a chemical equation described later at a temperature equal to or lower than the boiling point of water. It is, therefore, not necessary to pressurize a reaction container in an apparatus for the above reaction. Thus, increase in a facility cost can be prevented.

Here, at a leaching temperature lower than 90 °C or higher than 100 °C, the reaction may be performed as a reaction in accordance with a chemical equation described later. The reaction in accordance with the chemical equation described later may be performed at a pressure other than an atmospheric pressure.

In this embodiment, although an iron concentration in the sulfuric acid leachate 108 in step b is 30 g/L to 90 g/L, and free sulfuric acid is contained in 30 g/L or more, the free sulfuric acid reacts with magnesium contained in the crushed ore 103 to reduce an iron concentration and a free sulfuric acid concentration to 1/10 or less and 1/3 or less, respectively, compared with those in the sulfuric acid leachate 108 before the reaction. Here, a pH of the sulfuric acid leachate 108 before the reaction is, for example, within a range of pH 0.2 to pH 0.8. A pH of the solution after the reaction may be within a range of pH 1 to pH 3 or alternatively, a range of pH 1.5 to pH 2.

The reason may be explained by chemical reactions (5) to (8).

H₂SO₄ (free sulfuric acid)+MgO (oxide ore) = MgSO₄ (liquid)+H₂O (5)

Fe₂(SO₄)₃·(liquid)+1/3Na₂SO₄+4H₂O = 2/3NaFe₃(SO₄)₂(OH)₆·(solid)+2H₂SO₄ (6)

Fe₂(SO₄)_{3·}(liquid)+2/3NaCl+4H₂O = 2/3NaFe₃(SO₄)₂(OH)_{6·}(solid)+2/3HCl+5/3H₂SO₄ (7)

Fe2(SO₄)₃·(liquid)+4H₂O = 2FeO(OH)·(solid)+3H₂SO₄ (8)

Specifically, in accordance with equation (5), free sulfuric acid in the sulfuric acid leachate 108 reacts with magnesium contained in the crushed ore 103 to reduce the amount of free sulfuric acid, resulting in increase of pH of the solution. Thus, as a pH of the solution is increased, Natrojarosite and Goethite are generated in accordance with equations (6) to (8), resulting in precipitation of iron.

Since the oxide ore 102 contains iron and magnesium, the above reaction can more efficiently proceed. For example, when a component ratio of magnesium/iron is 0.125 or more, the amount of iron contained in the oxide ore 102 is relatively smaller, so that in accordance with equation (2), a relatively smaller amount of iron is leached from the oxide ore in the leaching step. Thus, an iron concentration in the reaction solution can be also reduced. Furthermore, since a relatively larger amount of magnesium is contained in the oxide ore 102, the amount of magnesium reacting with free sulfuric acid from the sulfuric acid leachate 108 brought into the reaction step is relatively larger. Therefore, in accordance with the reaction of equation (5), free sulfuric acid in the sulfuric acid leachate 108 can be adequately consumed using magnesium, resulting in pH adjustment.

As described above, iron and magnesium contained in the oxide ore 102 may allow iron to be adequately precipitated in accordance with equations (6) to (8), resulting in reduction in an iron concentration remaining in the reaction solution 110. Thus, the amount of iron remaining in the reaction solution 110 and thus brought into the neutralization step may be reduced. Therefore, increase in a cost for precipitating iron in the neutralization step may be prevented. As a result, increase in a cost for recovering nickel and cobalt can be prevented, and nickel and cobalt can be efficiently recovered.

There is not a particular upper limit to a component ratio of magnesium/iron; for example, 0.75 or more may be acceptable. The oxide ore 102 used in this embodiment is a limonite ore containing iron and magnesium in 20 wt% to 50 wt% both inclusive and 2.5 wt% to 15 wt% both inclusive, respectively. Thus, a component ratio of magnesium/iron is never 0.75 or more.

By using the crushed ore 103 of the over size in step c, the following effects can be achieved. That is, because the crushed ore 103 of the over size contains more magnesium than the under size, so that the reactions of equations (5) to (8) more effectively proceed. A reaction time may be 3 to 10 hours both inclusive or alternatively 4 to 6 hours both inclusive; that is, the reactions of equations (5) to (8) can be completed in a shorter time than the case where an oxide ore before classification is used. Here, since the crushed ore 103 of the over size contains nickel and cobalt, while reacting free sulfuric acid with magnesium to adjust a pH, by leaching nickel and cobalt in the crushed ore 103, recovery rates for nickel and cobalt can be further improved. Thus, while preventing increase in a cost for recovering nickel and cobalt, recovery rates for nickel and cobalt can be further improved, and nickel and cobalt can be efficiently recovered.

Here, a facility for this reaction may be a container with a stirrer commonly used, which may be made of, for example, stainless steel or a rubber lined steel. Therefore, the reaction in this step can be performed without using an expensive apparatus such as a titanium lined autoclave which is used in a reaction under a high temperature and a high pressure. Thus, increase in a cost for recovering nickel and cobalt can be prevented. As a result, nickel and cobalt can be efficiently recovered.

Furthermore, this step may be performed using a ferronickel slag which contains nickel in a relatively higher content among some ferronickel slag used in the neutralization step, together with the crushed ore from the over size ore. In this case, the slag may be used in a range such that a final pH during the reaction is less than 3. That is because with a pH of less than 3, the solution contains free sulfuric acid, which can prevent reduction in a leaching efficiency for nickel from an oxide ore.

### Step d: neutralization step

The reaction solution 110 and the reaction residue 111 obtained in step c and a neutralizing agent 112 can be used to perform the neutralization reaction at a pH within a range of pH 2 to pH 6. Alternatively, the neutralization reaction can be performed at a pH within a range of pH 3 to pH 5. Thus, a neutralization solution 113 with an iron concentration of 1 g/L or less which also contains nickel, cobalt, magnesium, calcium, manganese and zinc and a neutralization residue 114 are obtained. With a pH of 2 or higher, iron may be adequately precipitated. With a pH of 6 or lower, most of iron can be removed by precipitation while preventing coprecipitation of nickel and cobalt. Thus, a recovery rate for nickel and cobalt can be improved, and nickel and cobalt can be efficiently recovered.

Here, there are no particular restrictions to a pressure in this step. For example, a neutralization reaction may be performed using the reaction solution 110 and the reaction residue 111 and the neutralizing agent 112 at an atmospheric pressure, or alternatively at a pressure other than an atmospheric pressure.

As the neutralizing agent 112, hydroxides of an alkali metal such as sodium hydroxide; carbonates of an alkali metal such as sodium carbonate; hydroxides of an alkaline earth metal such as calcium hydroxide and magnesium hydroxide; oxides of an alkaline earth metal such as calcium oxide and magnesium oxide; carbonates of an alkaline earth metal such as calcium carbonate and magnesium carbonate, which are commonly used, may be employed. A ferronickel slag having a composition shown in Table 1 may be used. In addition, the above neutralizing agents may be used alone or in combination of two or more.

As used herein, the term "ferronickel slag" refers to a slag containing magnesium obtained during smelting ferronickel using a magnesium containing ore containing nickel in 2 wt% or more by pyrometallurgical smelting process. The amount of a ferronickel slag generated by pyrometallurgical smelting process is about 30 times to 35 times weight parts to 1 part of nickel 1, but only a part of the slag is effectively used.

By using, for example, a ferronickel slag containing magnesium as a neutralizing agent 112, while magnesium contained in the ferronickel slag can be effectively utilized as a neutralizing agent, the reaction solution 110 and the reaction residue 111 can be neutralized. Thus, while effectively utilizing resources, increase in a cost for recovering nickel and cobalt can be prevented.

Also, in addition to a ferronickel slag, any agent such as calcium hydroxide, magnesium hydroxide, calcium oxide, magnesium oxide, calcium carbonate and magnesium carbonate can be used as the neutralizing agent 112 as long as it can neutralize the reaction solution 110 and the reaction residue 111.

### Step e: Solid-liquid separation step

The neutralization solution 113 and the neutralization residue 114 obtained in step d are separated by adding a flocculant 115. The flocculant 115 may be, for example, a polymer flocculant. The solid-liquid separation may be performed by a commonly used thickener process; specifically, by countercurrent washing with a 6 or more stage thickener. Thus, the neutralization solution 113 containing nickel, cobalt, magnesium, calcium, manganese and zinc and the neutralization residue 114 are easily and efficiently separated by the solid-liquid separation such that nickel and cobalt in the neutralization solution are recovered in a high yield of 99 wt% or more and iron is contained in a low concentration of 1 g/L or less.

Here, the flocculant 115 may be, besides a polymer flocculant, any flocculant as long as it can separate the neutralization solution 113 from the neutralization residue 114.

Also, solid-liquid separation into the neutralization solution 113 and the neutralization residue 114 may be performed using another type of solid-liquid separator whose system is other than countercurrent washing with a 6 or more stage thickener.

### Step f: solvent extraction step

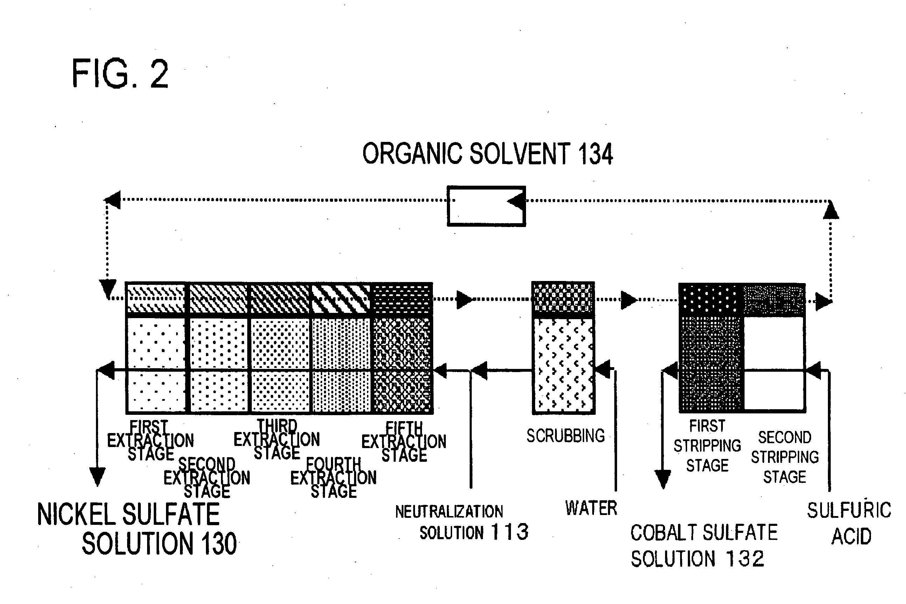

FIG. 2 is a flow chart for illustrating a solvent extraction step where the neutralization solution 113 containing nickel, cobalt, magnesium, calcium, manganese and zinc is separated into a nickel sulfate solution 130 and a cobalt sulfate solution 132, using an organic solvent 134 having a monothiophosphinic acid group. In this embodiment, there will be described a solvent extraction step consisting of a five stage extraction steps, a two stage stripping steps and a one stage scrubbing step. The chemical formula of the organic solvent 134 having a monothiophosphinic acid group is represented by general formula (1).

R₁R₂PSOH (1)

In formula (1), R₁ and R₂ are independently hydrocarbon optionally having a substituent. The number of carbon atoms in the hydrocarbon group is preferably not less than 3 and not more than 25, more preferably not less than 5 and not more than 15. The hydrocarbon group may not have polarity. R₁ and R₂ may be the same hydrocarbon group or different hydrocarbon group. Examples of the substituent include halogen group, oxy group, carbonyl group and an amide bond group. As the hydrocarbon for R₁ and R₂, optionally substituted cycloalkyl group, optionally substituted aryl group, optionally substituted straight chain or side chain aralkyl group, straight chain or side chain alkyl group, and straight chain or side chain alkenyl group may be used. Here, when the carbon number in R₁ or R₂ is 3 or more, the organic solvent 134 is not very soluble in water, so that it is little dissolved in an aqueous solution during extraction. Thus, handling properties of the organic solvent 134 are improved. Therefore, it can be used in the solvent extraction step. Further, when the carbon number in R₁ or R₂ is 5 or more, the organic solvent 134 is not more soluble in water, so that dissolution of the solvent into an aqueous solution is more difficult during extraction. Thus, handling properties of the organic solvent 134 are more improved. Therefore, it can be used in the solvent extraction step. In addition, when the carbon number in R₁ or R₂ is 25 or less, the organic solvent 134 is more soluble in a diluent such as Shellsol (Shell Chemichals Ltd., trademark) and Exxsol (trademark) D80 (ExxonMobil Chemichal Inc.) which are described later. Thus, handling properties of the organic solvent 134 are improved. Therefore, it can be used in the solvent extraction step. Further, when the carbon number of R₁ or R₂ is 15 or less, the organic solvent 134 is more further soluble in a diluent such as Shellsol (Shell Chemichals Ltd., trademark) and Exxsol (trademark) D80 (ExxonMobil Chemichal Inc.). Thus, handling properties of the organic solvent 134 are more improved. Therefore, it can be used in the solvent extraction step.

Specific examples of the organic solvent 134 may include di-(2,4,4-trimethylpentyl)-monothiophosphinic acid, di-(2-ethylhexyl)-monothiophosphinic acid, di-(n-octyl)-monothiophosphinic acid, di-(2-methyl-5-hexenyl)-monothiophosphinic acid, di-(p-methylcyclohexyl)-monothiophosphinic acid, di-(cyclohexyl)-monothiophosphinic acid, diphenylmonothiophosphinic acid, di-(p-ethylphenyl)-monothiophosphinic acid and di-(p-methylphenyl)-monothiophosphinic acid.

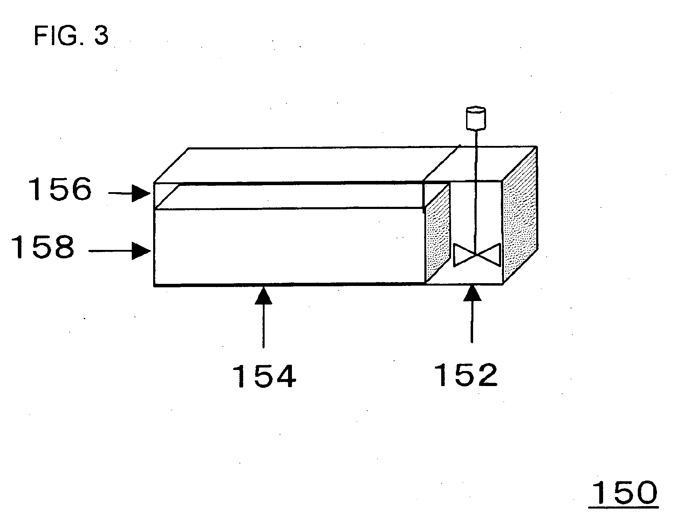

In the solvent extraction step, for example, a plurality of separation apparatuses for solvent extraction such as a mixer settler as shown in FIG. 3 are connected to constitute a solvent extraction apparatus. The mixer settler 150 consists of a mixer unit 152 where a solvent and a sulfuric acid solution are stirred, and a settler unit 154 where the solvent and the sulfuric acid solution stirred in the mixer unit is set to be separated into a solvent phase 156 and a solution phase 158.

In FIG. 2, a solid line and a broken line indicate flow of a solution phase and flow of a solvent phase, respectively. In this embodiment, Cyanex (trademark) 302 (Cyanamid Company) containing di-(2,4,4-trimethylpentyl)-monothiophosphinic acid as a main component was used as an organic solvent 134. Shellsol (Shell Chemichals Ltd. (trademark)) or Exxsol(trademark) D80 (ExxonMobil Chemichal Inc.) may be used as a diluent for a solvent. Formulas (9) to (10) represent a chemical formula of di-(2,4,4-trimethylpentyl)-monothiophosphinic acid as a main component of Cyanex (trademark) 302 (Cyanamid Company).

RRPSOH (9)

R = CH₃C(CH₃)₂CH₂CH(CH₃)CH₂- (10)

As shown in FIG. 2, a neutralization solution 113 is fed to a fifth extraction stage, and then moves through fourth extraction stage, third extraction stage and second extraction stage to first extraction stage. On the other hand, an organic solvent 134 such as Cyanex (trademark) 302 (Cyanamid Company) after stripping is fed from second stripping stage to the first extraction stage by, for example, a pump and then moves through the second extraction stage, the third extraction stage, the fourth extraction stage, the fifth extraction stage, first scrubbing stage, first stripping stage to second stripping stage, and then circulate within the solvent extraction step. A pH of the first extraction stage to the fifth extraction stage 5 is adjusted to a pH which can be used in cobalt extraction in each stage (pH adjustment step). Here, a pH in cobalt extraction when using an organic solvent 134 such as Cyanex (trademark) 302 (Cyanamid Company) having a monothiophosphinic acid group is within a range of pH 2.5 to pH 5.5 both inclusive, or alternatively within a range of pH 2.5 to pH 4.5. Sulfuric acid is fed to the second stripping stage and moves to the first stripping stage. Furthermore, a post scrubbing solution after scrubbing with water such hot water in the first scrubbing stage and removing particle contaminants in the organic solvent 134 is moved to the fifth extraction stage together with the neutralization solution 113.

In this step, in terms of a cobalt component in the neutralization solution 113 fed into the fifth extraction stage, a cobalt content decreases as the organic solvent 134 such as Cyanex (trademark) 302 (Cyanamid Company) as an extraction solvent moves for extracting the cobalt component, and finally, the solution after passing through the first extraction stage becomes a nickel sulfate solution 130 substantially free from cobalt. The nickel sulfate solution 130 also contains magnesium component, calcium component and manganese component in the neutralization solution 113.

On the other hand, the organic solvent 134 such as Cyanex (trademark) 302 (Cyanamid Company) as an extraction solvent extracts cobalt from the neutralization solution 113 in the first extraction stage to the fifth extraction stage. Thus, as the organic solvent 134 moves through each extraction stage, a cobalt content in the organic solvent 134 increases. Next, the organic solvent 134 with a higher cobalt content is combined with sulfuric acid fed to the second stripping stage in the first stripping stages and the second stripping stage, so that cobalt is stripped into the sulfuric acid while the organic solvent 134 after passing through the second stripping stage becomes the organic solvent 134 substantially free from cobalt. Since the sulfuric acid after passing through the first stripping stage contains the stripped cobalt, the sulfuric acid becomes the cobalt sulfate solution 132. The amount of sulfuric acid used in the stripping is adjusted to give such a pH that the organic solvent 134 after the second stripping stage is free from cobalt. Since stripping of zinc is harder than that of cobalt, a low pH may be selected to allow zinc to be separated in the second stripping stage for concomitantly stripping zinc and cobalt, or alternatively, cobalt may be stripped and zinc may be stripped with sulfuric acid again.

In this step, by using the organic solvent 134 such as Cyanex (trademark) 302 (Cyanamid Company) having a monothiophosphinic acid group, nickel and cobalt can be efficiently recovered.

That is, when performing solvent extraction with an organic solvent in the related art represented by the technique described in the Patent Document 2, magnesium component, calcium component and manganese component are extracted together with cobalt component. The organic solvent may be overloaded by magnesium component, calcium component and manganese component, leading to reduction in a cobalt extraction rate. In contrast, in this embodiment, cobalt component and zinc component can be selectively extracted from the neutralization solution 113 by using the organic solvent 134 such as Cyanex (trademark) 302 (Cyanamid Company) having a monothiophosphinic acid group. Thus, it can reduce a room for extraction of calcium component, magnesium component and manganese component into the organic solvent 134 or for extraction of cobalt by the organic solvent 134 due to extraction of calcium component, magnesium component and manganese component, that is, it can prevent so-called overload from occurring. Therefore, deterioration in cobalt extraction performance of the organic solvent 134 can be prevented. As a result, each of nickel and cobalt can be efficiently separated and recovered.

In the related art represented by the technique described in Patent Document 2, magnesium component, calcium component and manganese component are extracted together with cobalt component and thus are present in a cobalt sulfate solution. In particular, calcium component has a low solubility in a sulfuric acid solution. Therefore, there has been a problem that it tends to be supersaturated in a sulfuric acid solution and thus to be precipitated as calcium sulfate, leading to adhesion of the precipitate to a solvent extract apparatus as a scale. Furthermore, in the step of recovering cobalt as a sulfide, hydroxide or carbonate from a cobalt sulfate solution, part of magnesium component and part of manganese component are, in addition to the calcium precipitate, precipitated and contained in the sulfide, the hydroxide or the carbonate as impurities. Thus, it is difficult to recover cobalt with a high purity. In contrast, in this embodiment, the organic solvent 134 such as Cyanex (trademark) 302 (Cyanamid Company) having a monothiophosphinic acid group selectively extracts cobalt component and zinc component, so that the contents of magnesium component, calcium component and manganese component in the cobalt sulfate solution 132 can be controlled. Therefore, precipitation of calcium sulfate in the cobalt sulfate solution 132 can be prevented, so that scale adhesion to a solvent extract apparatus can be prevented. Thus, a shutdown time of the solvent extract apparatus for removing scale can be reduced, so that each of nickel and cobalt can be efficiently separated and recovered. Furthermore, since increase in contents of manganese component and magnesium component can be prevented, to recover cobalt as a sulfite, hydroxide or carbonate with a higher purity. Therefore, each of nickel and cobalt can be efficiently separated and recovered.

By separating cobalt from the neutralization solution 113 using the organic solvent 134 having a monothiophosphinic acid group which can selectively extract cobalt, magnesium or calcium can be used as a neutralizing agent in step d (neutralization step). In other words, the organic solvent 134 can selectively extract cobalt component and zinc component from the neutralization solution 113 in step f (solvent extraction step). Therefore, even when magnesium component and calcium component increase in the neutralization solution 113 by using magnesium or calcium as a neutralizing agent, overload due to extraction of calcium component and magnesium component by the organic solvent 134 can be prevented. Thus, deterioration in cobalt extraction performance of the organic solvent 134 can be prevented. As a result, by using calcium or magnesium which is relatively inexpensive as a neutralizing agent, each of nickel and cobalt can be more efficiently separated and recovered. From the nickel sulfate solution 130 and the cobalt sulfate solution 132 thus obtained, each of nickel and cobalt is recovered by using a method where it is precipitated and recovered as a sulfide by adding sodium hydro sulfide, sodium sulfide, ammonium sulfide or hydrogen sulfide, or alternatively using a method where it is precipitated and recovered as a hydroxide or carbonate by adding a hydroxide, oxide or carbonate.

By the process described above, nickel and cobalt can be efficiently separated and recovered from the oxide ore 102.

There has been described one suitable embodiment of this invention, but this invention is not limited to the embodiments. It is, of course, apparent to the skilled in the art that the above embodiment may be modified within the range of this invention.

For example, although there has been described an aspect containing step a for classifying an oxide ore containing nickel and cobalt in this embodiment, the step may be omitted.

Also, although there has been described an aspect where a sodium salt is added in step b and step c, a sodium salt may not be added.

In addition, although there has been described the use of an oxide ore containing magnesium from an over size classified in step a for adjusting a pH in step c in this embodiment, the process may be performed using, for example, an oxide ore with a relatively lower nickel content and a relatively higher magnesium content whose nickel andmagnesium contents are 1wt% or less and 15 wt% or more, respectively, that is, which is generally not used for recovering nickel and cobalt. Such an oxide ore often exists in, for example, a deeper layer in a nickel or cobalt mine, and is characterized in that it has a relatively lower iron content. Therefore, by using the above oxide ore in step c, while leaching nickel and cobalt into a sulfuric acid solution, a pH may be adjusted with magnesium to prevent leached amount of iron from being increased. As a result, while preventing reduction in a recovery rate for nickel and cobalt, a cost for recovering nickel and cobalt can be reduced. A magnesium containing substance other than an oxide ore may be used.

Further, when adjusting a pH in accordance with step c, an oxide ore with a lower content of nickel and a higher content of magnesium may be used together with an oxide ore containing magnesium from an over size classified in step a.

Also, when adjusting a pH in accordance with step c, a magnesium containing substance other than an oxide ore may be used together with an oxide ore containing magnesium from an over size classified in step a.

In addition, when adjusting a pH in accordance with step c, a magnesium containing substance other than an oxide ore may be used together with the oxide ore with a lower content of nickel and a higher content of magnesium.

In addition, when adjusting a pH in accordance with step c, an oxide ore containing magnesium from an over size classified in step a may be used together with the oxide ore with a lower content of nickel and a higher content of magnesium as well as a magnesium containing substance other than an oxide ore.

Further, although there has been described an aspect where a pH is adjusted using magnesium in step c, the pH adjustment may be omitted.

Also, in step b or in step c, a reducing agent such as iron and sodium sulfite may be used. Thus, leaching rates of nickel and cobalt can be further improved to efficiently recover nickel and cobalt.

As a reducing agent, iron powder, sodium sulfite and a mixture thereof may be used. When using iron powder, it may be added in an amount within a range of 0.1 wt% to 1 wt% both inclusive, or alternatively 0.2 wt% to 0.5 wt% both inclusive to the used amount of the oxide ore 102. A particle size of the iron powder may be a diameter of about 1 mm, and iron with its surface being not oxidized may be used. When using sodium sulfite, it may be added in an amount within a range of 1 wt% to 10 wt% both inclusive, or alternatively 5 wt% to 8 wt% both inclusive to the used amount of the oxide ore 102.

By adding the reducing agent within the above range, the reducing agent may be adequately effective to further efficiently improve leaching rates of nickel and cobalt, particularly of cobalt by synergy with control in an iron concentration in other steps. Thus, while reducing a cost for removing iron, recovery rates for nickel and cobalt may be further improved.

Addition of a reducing agent would be effective for improving leaching rates of nickel and cobalt, particularly of cobalt because of the following reason.

That is to say, cobalt in the oxide ore 102 exists as a bivalent oxide (CoO) and a trivalent oxide (Co₂O₃), and a ratio of these oxides would be dependent on a mining place. Binding state between cobalt and oxygen is stronger and more stable in Co₂O₃ than in CoO. It is, therefore, not easy to decompose the bond between cobalt and oxygen in a trivalent cobalt oxide contained in the slurry ore 104 with sulfuric acid 105. Thus, it would be estimated that by adding a reducing agent in addition to sulfuric acid 105, a binding power between cobalt and oxygen in the trivalent cobalt oxide becomes weaker and the cobalt is reduced from trivalent to bivalent, allowing cobalt to be more easily leached with sulfuric acid 105.

Also, although there has been described an aspect where nickel and cobalt are separated and recovered using five extraction stages, one scrubbing stage and two stripping stages in the above embodiment, the number of stages may be varied as long as they can allow nickel and cobalt to be separated and recovered; for example, seven extraction stages, two scrubbing stages and three stripping stages.

In addition, although there has been described an aspect where nickel and cobalt are separated by contacting the neutralization solution 113 with the organic solvent 134 in the above embodiment, nickel and cobalt can be separated and recovered by contacting a sulfuric acid solution concomitantly containing nickel and cobalt other than the neutralization solution 113 with the organic solvent 134 as an extraction solvent.

### (EXAMPLES)

This invention will be specifically described with reference to Examples.

### (Example 1)

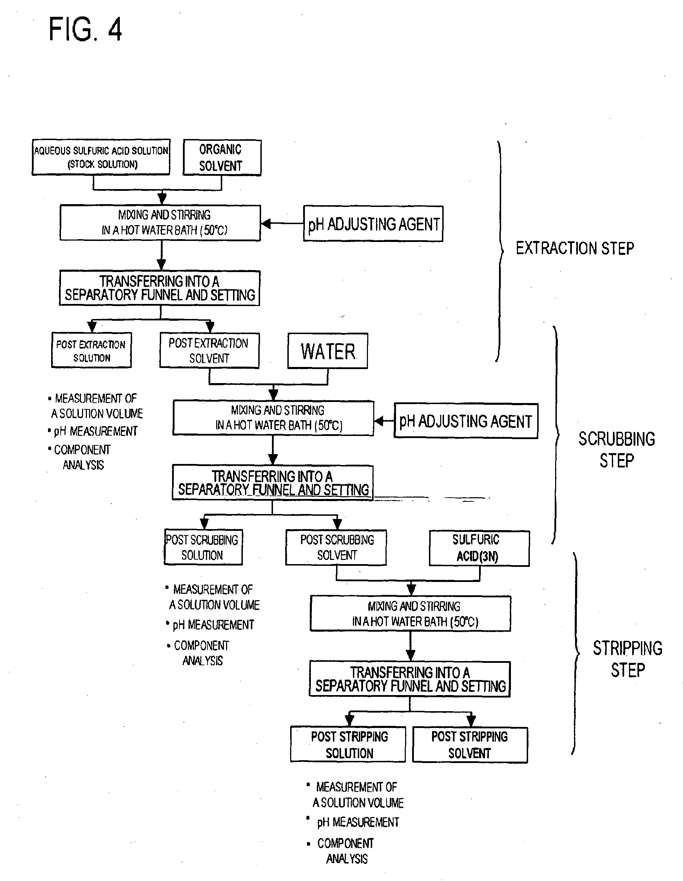

Using Cyanex (trademark) 302 (Cyanamid Company) mainly containing a monothiophosphinic acid group as an organic solvent, a solvent extraction experiment was performed for each of nickel, manganese, magnesium, zinc and cobalt components by means of the process shown in the flow chart in FIG. 4.

Formulae (13) and (14) show chemical formulae of di-(2,4,4-trimethylpentyl)-monothiophosphinic acid as a main component of Cyanex (trademark) 302 (Cyanamid Company).

RRPSOH (13)

R=CH₃C(CH₃)₂CH₂CH(CH₃)CH₂- (14)

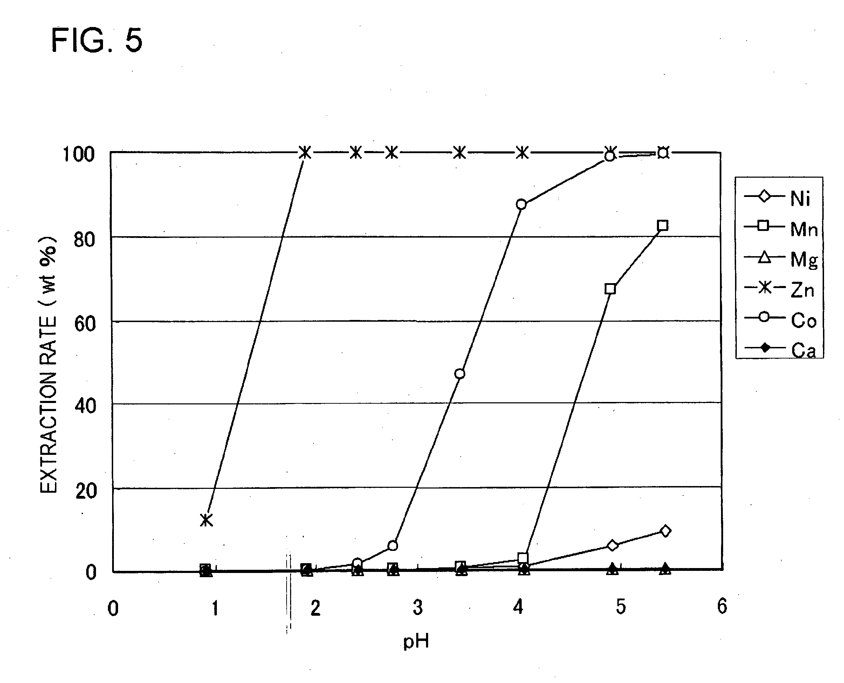

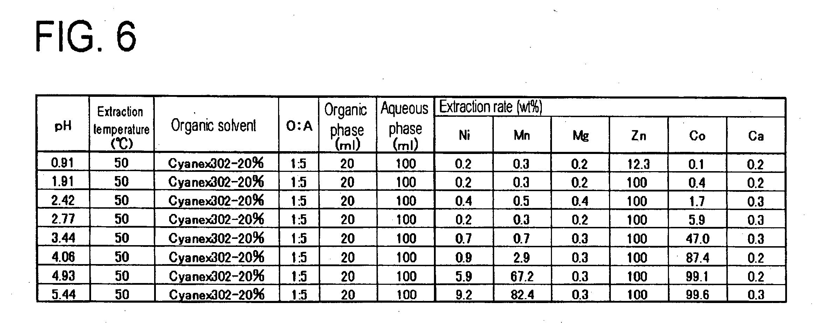

FIG. 5 to FIG.7 show the conditions and the results of the experiments. FIG. 5 is a graphical expression of the data in FIG. 6. Hereinafter, the term "O:A" means a ratio where volumes of an organic and an aqueous phases are O and A, respectively.

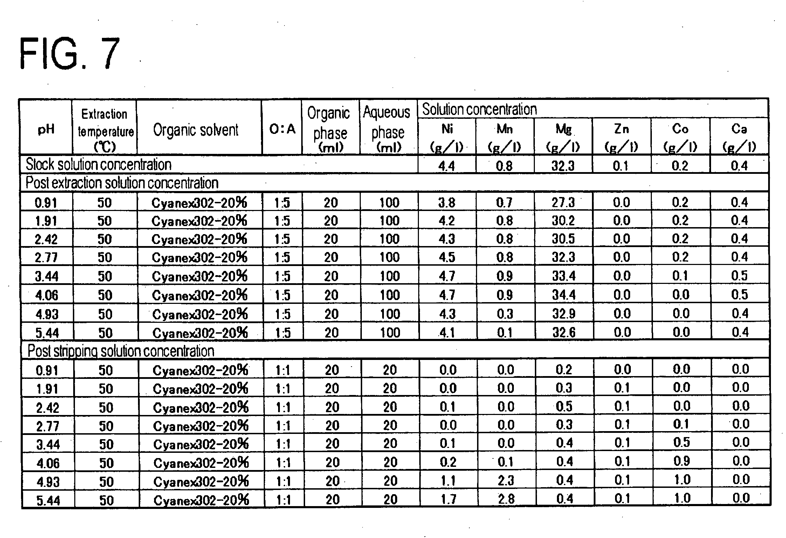

A solution used in this example is a stock solution having the concentrations shown in FIG. 7 which is a neutralization solution described later from which impurities such as iron and aluminum have been removed. Solution concentrations (contents of individual elements) in the stock solution are Ni: 4.4 g/L, Mn: 0.8 g/L, Mg: 32.3 g/L, Zn: 0.1 g/L, Co: 0.2 g/L and Ca: 0.4 g/L. A neutralization solution used in this example is a solution prepared by neutralizing, with a neutralizing agent, a reaction solution which is prepared by reacting a sulfuric acid leachate with, for example, magnesium for adjusting its pH from the range of pH 0.2 to pH 0.8 before the reaction to the range of pH 1 to pH 3. An organic solvent is a mixture of Cyanex (trademark) 302 (Cyanamid Company) and Shellsol (Shell Chemichals Inc. (trademark)) which is diluted with 20 wt% of Cyanex (trademark) 302 and 80 wt% of Shellsol (trademark).

Hereinafter, there will be described a preparation method for the neutralization solution used in this example in detail.

First, an oxide ore containing nickel, cobalt, iron and magnesium was classified by a vibrating screen with a mesh of 2 mm into an over size ore with a particle size of more than 2 mm and an under size ore with a particle size of 2 mm or less. Next, the under size ore was treated with marine water to prepare a slurry ore, and the over size ore was crushed into a crushed ore (classification step).

Then, to the slurry ore were added sulfuric acid and iron powder (particle size: 1 mm) as a reducing agent, and the mixture was leached under the conditions of a temperature of 95 °C and an atmospheric pressure for 5 hours to prepare a sulfuric acid leachate containing nickel and cobalt and a leaching residue (leaching step). The used amount of sulfuric acid in the leaching step was 65 wt% of the oxide ore, and the used amount of the iron powder was 0.4 wt% (0.004 times weight) of the oxide ore. As analyzed by X-ray diffraction, the leaching residue contained Natrojarosite generated by the reaction of iron leached from the slurry ore with sulfuric acid and a sodium salt in the marine water.

Next, free sulfuric acid in the sulfuric acid leachate containing the leaching residue was reacted with magnesium contained in the crushed ore of the over size crushed in the classification step under the conditions of a temperature of 95 °C and an atmospheric pressure for 5 hours to consume the free sulfuric acid for adjusting a pH to about 1 to 3, giving a reaction solution and a reaction residue (reaction step). As analyzed by X-ray diffraction, the reaction residue contained Natrojarosite.

Subsequently, to the reaction solution containing the reaction residue was added a ferronickel slag containing magnesium as a neutralizing agent for adjusting a pH to 5, to give a neutralization solution and a neutralization residue (neutralization step).

Then, to the neutralization solution containing the neutralization residue was added a polymer flocculant, and the mixture was subjected to solid-liquid separation using a countercurrent washing type of six stage thickener, to separate the neutralization solution from the neutralization residue (solid-liquid separation step). As determined by elemental analysis (componential analysis) in accordance with an ICP method, the neutralization solution contained nickel, cobalt, manganese, calcium, zinc, iron and magnesium. By the above process, the neutralization solution used in this example was prepared.

Hereinafter, there will be described a solvent extraction experiment shown in the flow chart in FIG. 4. First, a sulfate solution (stock solution) containing predetermined amounts of nickel, cobalt, manganese, magnesium, calcium and zinc was combined with an organic solvent in a volume ratio of 5:1 (O:A=1:5), and after adding a pH adjusting agent, the mixture was mixed with stirring for 5 minutes in a hot water bath at a temperature of 50 °C (pH adjustment step) to extract predetermined elements into the organic solvent. Then, the mixture was transferred in a separatory funnel, set for an adequate period, and was then separated into a post extraction solvent and a post extraction solution (extraction step).

The post extraction solution was measured for its volume, analyzed for a concentration of each element (component) in accordance with the ICP method and measured for its pH. FIG. 7 shows the contents of Ni, Mn, Mg, Zn, Co and Ca (solution concentrations) in the post extraction solution at each of measurement pHs: pH 0.91, pH 1.91, pH 2.42, pH 2.77, pH 3.44, pH 4.06, pH 4.93 and pH 5.44. Meanwhile, the organic solvent after extracting the predetermined elements was scrubbed by mixing with stirring the organic solvent with water in a volume ratio of 1:1 for 5 min in a hot water bath at a temperature of 50 °C in order to remove a small amount of the solution suspended in the organic solvent. After transferring it in a separatory funnel, the mixture was set for an adequate period and then was separated into a post scrubbing solvent and a post scrubbing solution (scrubbing step).

The post scrubbing solution was measured for its volume, analyzed for a concentration of each element (component) in accordance with the ICP method and measured for its pH. Meanwhile, the post scrubbing solvent was stripped into a sulfuric acid solution by adding a 3N sulfuric acid solution in a volume ratio of 1:1 and then adding a pH adjusting agent and mixing with stirring for 5 minutes in a hot water bath at a temperature of 50 °C. Then, after transferring it in a separatory funnel, the mixture was set for an adequate period and was then separated into a post stripping solvent and a post stripping solution (stripping step).

The post stripping solution was measured for its volume, analyzed for a concentration of each element (component) in accordance with the ICP method and measured for its pH. FIG. 7 shows the contents of Ni, Mn, Mg, Zn, Co and Ca (solution concentrations) in the post stripping solution at each of measurement pHs: pH 0.91, pH 1.91, pH 2.42, pH 2.77, pH 3.44, pH 4.06, pH 4.93 and pH 5.44.

An extraction rate for each element was measured using the calculation equation: ((Element weight in the post stripping solution) / (Element weight in the post stripping solution + Element weight of the post extraction solution)) x 100. FIG. 6 shows an extraction rate for each element at each pH described above.

Since no element concentrations were detected in the post scrubbing solution, the solution was excluded from the calculation of an extraction rate.

### (Example 2)

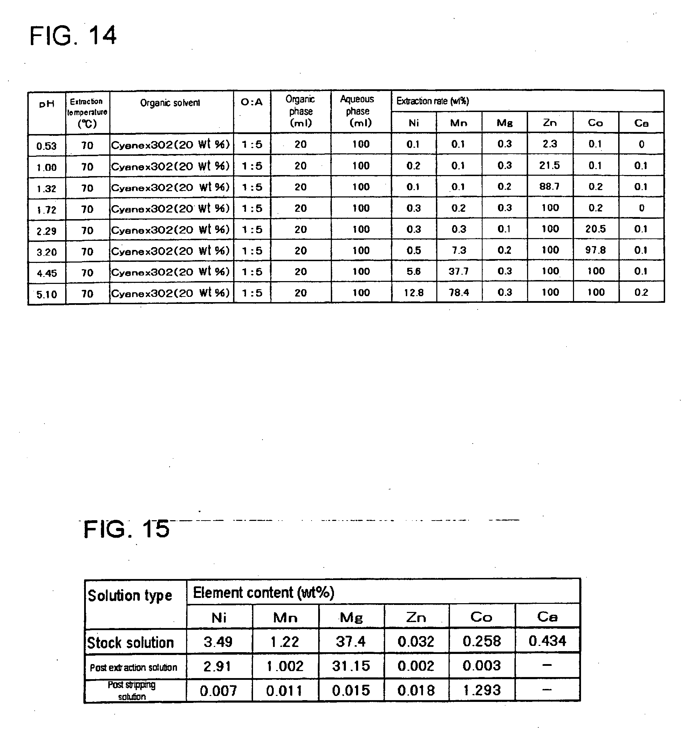

In this example, an experiment was performed under the same conditions described in Example 1, except that the extraction step was performed with a hot water bath temperature of 70 °C and a mixing and stirring period of 1 minute; the scrubbing step was performed with a hot water bath temperature of 70 °C and a mixing and stirring period of 30 seconds; and the stripping step was performed at a hot water bath temperature of 70 °C and a mixing and stirring period of 1 minute. The neutralization solution used in this example was prepared as described for the neutralization solution in Example 1. FIG. 14 shows an extraction rate for each element at each of pHs: pH 0.53, pH 1, pH 1.32, pH 1.72, pH 2.29, pH 3.2, pH 4.45 and pH 5.1.

### (Comparable Example)

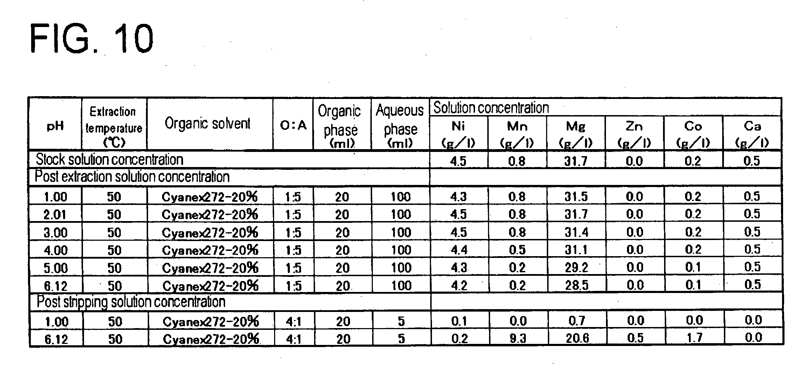

A solvent extraction experiment was performed in accordance with the process shown in the flow chart in FIG. 4 for each of nickel, cobalt, manganese, magnesium, calcium and zinc, under the same conditions and methods described in Example 1, except that Cyanex (trademark) 272 (Cyanamid Company) mainly containing a phosphinic acid group was used as a solvent. The neutralization solution used in this comparable example was prepared as described for the neutralization solution used in Example 1. The contents of the elements in the stock solution are Ni: 4.5 g/L, Mn: 0.8 g/L, Mg: 31.7 g/L, Zn: 0 g/L, Co: 0.2 g/L and Ca: 0.5 g/L as shown in FIG. 10, which are substantially similar to the solution concentrations (contents for the each elements) in the stock solution used in Example 1 and Example 2.

Formulae (11) and (12) show chemical formulae of di-(2,4,4-trimethylpentyl)-phosphinic acid as a main component of Cyanex (trademark) 272 (Cyanamid Company).

RRPOOH (11)

R=CH₃C(CH₃)₂CH₂CH(CH₃)CH₂- (12)

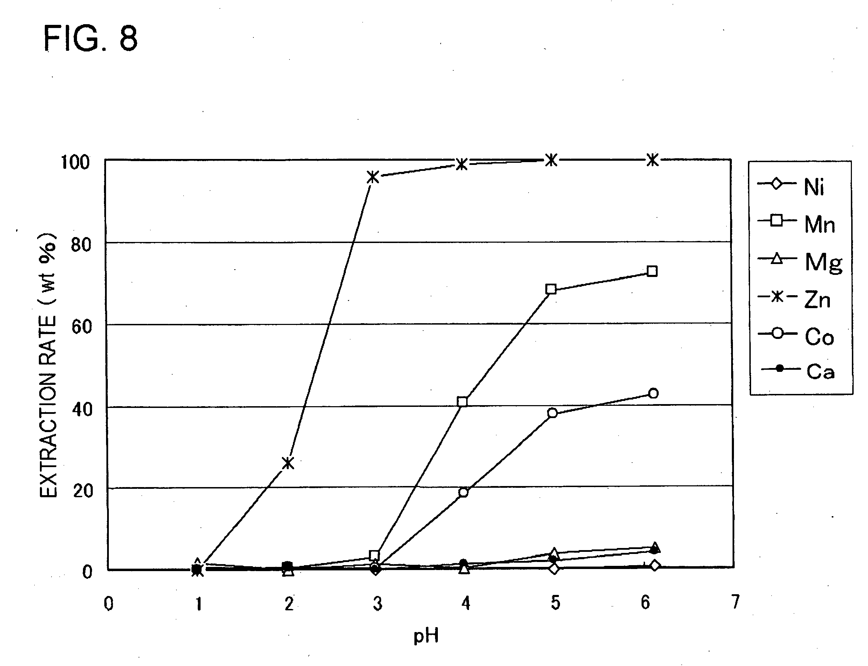

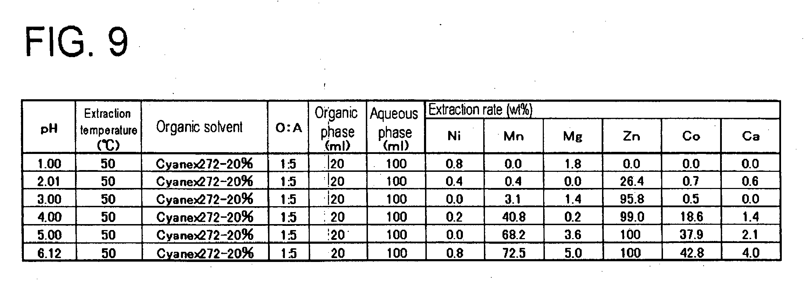

FIG. 8 to FIG. 10 show the experimental conditions and the experimental results of Comparable Example. FIG. 8 is a graphical expression of the data in FIG. 9.

It was observed that in Comparable Example where Cyanex (trademark) 272 (Cyanamid Company) was used as an organic solvent, together with cobalt, calcium, magnesium and manganese were extracted into the organic solvent around at pH 4 to pH 6 which is a cobalt extraction range, as shown in FIG. 8 and FIG. 9. Specifically, at pH = 6.12, the extracted amounts into the organic solvent are cobalt: 8.5 mg, calcium: 10 mg, magnesium: 105 mg and manganese: 48 mg. Therefore, it was found in this comparative example that the solvent extraction step performed using Cyanex (trademark) 272 (Cyanamid Company) as an organic solvent resulted in the presence of calcium, magnesium and manganese in 1.13 times amounts, 5.6 times amounts and 12.4 times amounts, respectively, to the amount of the extracted cobalt in the organic solvent.

By contrast, it was found that in Example 1 and Example 2 where Cyanex (trademark) 302 (Cyanamid Company) was used as an organic solvent, substantially no components other than cobalt or zinc were extracted into the organic solvent around pH 4, that is, an extraction range for cobalt, as shown in FIG. 5, FIG. 6 and FIG. 14. It is because the extraction curves for manganese and nickel are in a higher pH range than the extraction curve for cobalt.

The experimental results described above indicated that using Cyanex (trademark) 302 (Cyanamid Company) rather than Cyanex (trademark) 272 (Cyanamid Company) as an organic solvent, zinc and cobalt can be selectively extracted from a sulfuric acid derived from a neutralization solution containing nickel, cobalt, magnesium, calcium, manganese and zinc into an organic solvent.

### (Example 3)

Using the neutralization solution prepared by the method in Example 1, five extraction stages, scrubbing and stripping were performed under the same conditions described for the experimental procedure in Example 1, to experiment behavior of each element extracted into an organic solvent in each extraction stage.

The first stage extraction was performed with solvent amount/solution amount = 0.2, solution temperature: 50 °C and pH = 4.01 to separate the organic solvent from the solution. Next, the organic solvent into which cobalt and so on were extracted was contacted with a new solution, and the mixture was subjected to a second extraction stage under the same conditions described in the first extraction stage, to separate the organic solvent from the solution. Then, the procedure was repeated, that is, a third extraction stage (pH = 4.00), a fourth extraction stage (pH = 4.00) and a fifth extraction stage (pH = 4.03) were performed (extraction step).

Then, the organic solvent after the fifth extraction stage was scrubbed with the organic solvent/water = 2 and a liquid temperature: 50 °C (scrubbing step).

Next, the scrubbed organic solvent was stripped with 3N sulfuric acid, with the organic solvent/sulfuric acid (3N) = 2 and a liquid temperature: 50 °C (stripping step).

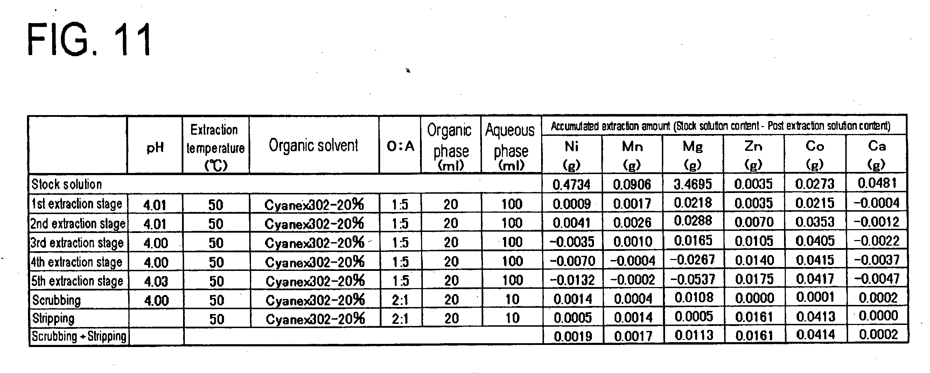

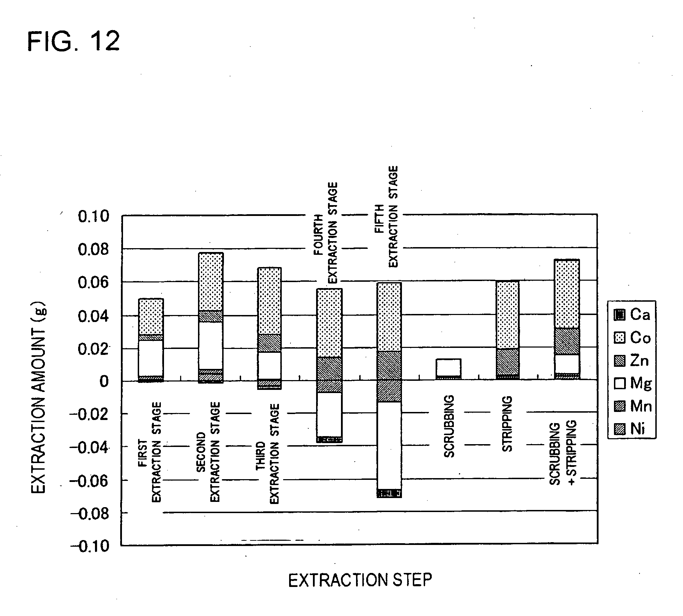

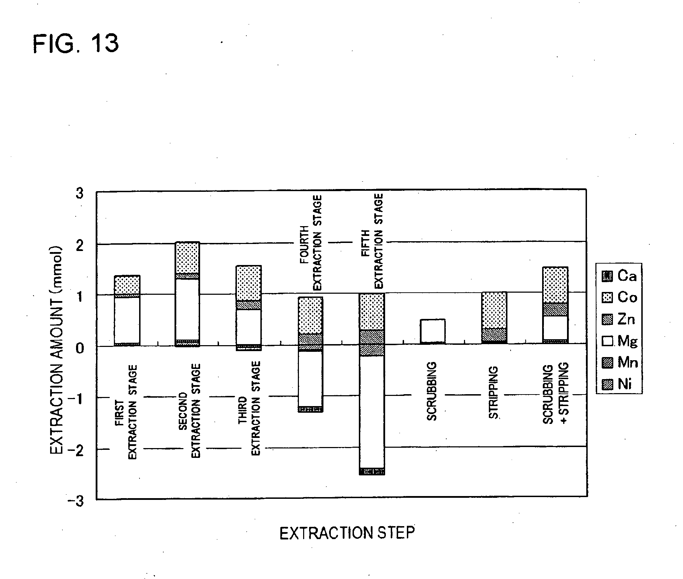

Element concentrations in a liquid obtained in each step (for example, a liquid after the third extraction stage) were analyzed to measure an accumulated extraction amount after each extraction stage and contents of each element in the liquid after scrubbing and the liquid after stripping. The measurement results are shown in FIG. 11 to FIG. 13. Here, a concentration in the liquid after the extraction process was analyzed and a reduction was accumulated as an extraction amount. In these figures, a negative part indicates that the increase after the extraction process was transferred from the solvent phase to the aqueous phase. FIG. 12 is a graphical expression of the data in FIG. 11. FIG. 13 is a graph showing an extraction amount (g) in the ordinate in the graph of FIG. 12 as an extraction amount (mmol).

As shown in FIG. 11 to FIG. 13, the extraction amounts of zinc and cobalt into the organic solvent increase as the extraction stages progress in the multi stage extraction steps. On the other hand, although nickel, manganese and magnesium are once extracted into the organic solvent phase, they return from the organic solvent phase into the solution phase as the extraction stages progress. In addition, Magnesium and nickel are removed by scrubbing.

Difference in element behavior in each stage in the extraction step would be derived from difference in stability between complexes of the elements. Specifically, from this example, it can be assumed that the order of complex stability is zinc > cobalt >> manganese > nickel > magnesium.

From this example, it is found that by adjusting a pH of the solution phase to about 4, about five stages extraction, one stage scrubbing with water and one stage stripping with a sulfuric acid solution can be performed to sufficiently separate nickel and cobalt.

### (Example 4)

Using the apparatus in FIG. 3 described for the embodiment including five stages extraction, scrubbing and stripping, the process shown in FIG. 2 was performed and each element extracted into the organic solvent was experimented for its behavior in each extraction stage. The liquid used in this example was a slightly sulfuric acid solution with a pH of 5 prepared by the same method described for the.liquid used in Example 1 (hereinafter, referred to as a sulfuric acid solution), the element contents in the sulfuric acid solution were Ni: 3.49 g/L, Mn: 1.22 g/L, Mg: 37.4 g/L, Zn: 0.032 g/L, Co: 0.258 g/L and Ca: 0.434 g/L. The conditions such as a liquid temperature and a mixing and stirring period in the extraction step, the scrubbing step and the stripping step were under the substantially same conditions described in Example 2.

The first stage extraction was performed with organic solvent amount/sulfuric acid solution amount = 0.2, solution temperature: 70 °C and pH = 3.5 to separate the organic solvent from the sulfuric acid solution. As a pH adjusting agent, sodium carbonate was used. Next, the organic solvent into which cobalt and so on were extracted was contacted with a new sulfuric acid solution, and the mixture was subjected to a second stage extraction under the same conditions described in the first extraction stage, to separate the organic solvent from the sulfuric acid solution. Then, the procedure was repeated, that is, a third extraction stage, a fourth extraction stage and a fifth extraction stage were performed (extraction step) .

Then, the organic solvent after the fifth extraction stage was scrubbed with purified water, with the solvent/water = 2 and a liquid temperature: 70 °C for adjusting pH = 4.5 (scrubbing step).

Next, the scrubbed organic solvent was stripped with 3N sulfuric acid, with the organic solvent/sulfuric acid (3N) = 2 and a liquid temperature: 70 °C (stripping step). A pH in the stripping step was 1.5.

The solution after the first extraction stage obtained in the above step was analyzed for element concentrations (post extraction solution concentrations). The results were Ni: 2.91 g/L, Mn: 1.002 g/L, Mg: 31.15 g/L, Zn: 0.002 g/L and Co: 0.003 g/L as shown in FIG. 15. Furthermore, the solution after the stripping step was analyzed for its element concentrations (post stripping solution concentration). The results were Ni: 0.007 g/L, Mn: 0.011 g/L, Mg: 0.015 g/L, Zn: 0.018 g/L and Co: 1.293 g/L as shown in FIG. 15.

It is found from this example that by adjusting a pH of the solution phase to about 4.5 in the extraction step, five stages extraction, one stage scrubbing with water and one stage stripping with a sulfuric acid solution can be performed to sufficiently separate nickel and cobalt, and that nickel and cobalt can be sufficiently separated even when a temperature during the mixing with stirring is about 70 °C and a mixing and stirring period is about 30 seconds to 1 minute.

## Claims

1. A process for separating and recovering nickel and cobalt from an oxide ore containing nickel and cobalt, comprising the steps of:
a leaching step where nickel and cobalt are leached from said oxide ore with sulfuric acid to obtain a sulfuric acid leachate containing nickel and cobalt and a leaching residue;
a reaction step where said sulfuric acid leachate containing said leaching residue is reacted by pH adjustment to obtain a reaction solution containing nickel and cobalt and a reaction residue;
a neutralization step where said reaction solution containing said reaction residue is neutralized with a neutralizing agent to obtain a neutralization solution containing nickel and cobalt and a neutralization residue;
a solid-liquid separation step where said neutralization solution is separated from said neutralization residue using a thickener with a flocculant to separate said neutralization solution and said neutralization residue;
a solvent-extraction step where cobalt is selectively extracted from said neutralization solution into an extraction solvent containing a monothiophosphinic acid compound as an extracting agent represented by general formula (1):
R₁R₂PSOH (1)
wherein R₁ and R₂ which may be the same or different independently represent hydrocarbon optionally having a substituent
by contacting extraction solvent with said neutralization solution;
**characterized in that**
in said leaching step the amount of said sulfuric acid is not less than 50 wt% and not more than 80 wt% of the weight of said oxide ore; and
between said solid-liquid separation step and said solvent-extraction step, the pH of the mixture of said neutralization solution and said extraction solvent is adjusted to not less than 2.5 and not more than 5.5;

2. The process according to claim 1, further comprising:
before said leaching step, classifying said oxide ore into a small particle oxide ore and a large particle oxide ore containing magnesium;
wherein in said leaching step, nickel and cobalt are leached from said small particle oxide ore and
in said reaction step, said sulfuric acid leachate containing said leaching residue is reacted with magnesium contained in said large particle oxide ore to adjust a pH.

3. The process according to claim 1 or 2,
wherein in said leaching step, nickel and cobalt are leached from said oxide ore further using a sodium salt to obtain a sulfuric acid leachate containing nickel and cobalt and a leaching residue; and
in said reaction step, said sulfuric acid leachate containing said leaching residue is pH-adjusted to obtain a reaction solution containing nickel and cobalt and a reaction residue.

4. The process according to claim 3,
wherein said sodium salt is a sodium salt contained in marine water.

5. The process according to any one of claims 1 to 4,
wherein said R₁ and R₂ independently have not less than 3 and not more than 25 carbon numbers.

6. The process according to any one of claims 1 to 5,
wherein said hydrocarbon group is hydrocarbon group selected from the group consisting of optionally substituted cycloalkyl group, optionally substituted aryl group, optionally substituted straight chain or side chain aralkyl group, straight chain or side chain alkyl group and straight chain or side chain alkenyl group.

7. The process according to any one of claims 1 to 6,
wherein said R₁ and R₂ are represented by R₁ = R₂ = CH₃C(CH₂)₂CH₂CH(CH₃)CH₂.

8. The process according to any one of claims 1 to 7,
wherein both said leaching step and said reaction step are performed at a temperature of 90 °C or higher.

9. The process according to any one of claims 1 to 8,
wherein both leaching step and said reaction step are performed at an atmospheric pressure.

10. The process according to any one of claims 1 to 9,
wherein said neutralizing agent is a slag containing magnesium.

11. The process according to any one of claims 1 to 10,
wherein in said leaching step, a reducing agent is further added for leaching nickel and cobalt from said oxide ore, to obtain a sulfuric acid leachate containing nickel and cobalt and a leaching residue.

12. The process according to claim 11,
wherein said reducing agent is an iron powder.

13. The process according to claims 1 to 12,
wherein said extraction solvent circulate within said solvent-extraction step.

## Patentansprüche

1. Ein Verfahren zum Abtrennen und Rückgewinnen von Nickel und Kobalt aus einem Nickel und Kobalt enthaltenden Oxiderz, umfassend die Schritte:
einen Laugungsschritt, bei dem Nickel und Kobalt aus dem Oxiderz unter Verwendung von Schwefelsäure ausgelaugt werden, um eine Nickel und
Kobalt enthaltende Schwefelsäurelauge sowie einen Laugungsrückstand zu erhalten;
einen Reaktionsschritt, wobei diese den Laugungsrückstand enthaltende Schwefelsäurelauge durch pH-Anpassung umgesetzt wird, um eine Nickel und Kobalt enthaltende Reaktionslösung sowie einen Reaktionsrückstand zu erhalten;
einen Neutralisationsschritt, bei dem die den Reaktionsrückstand enthaltende Reaktionslösung mit einem Neutralisationsmittel neutralisiert wird, um eine Nickel und Kobalt enthaltende Neutralisationslösung sowie einen Neutralisationsrückstand zu erhalten;
einen Fest-Flüssig-Trennungsschritt, bei dem die Neutralisationslösung von dem Neutralisationsrückstand unter Verwendung eines Verdickungsmittels mit einem Flockungsmittel abgetrennt wird, um die Neutralisationslösung und den Neutralisationsrückstand abzutrennen;
einen Lösungsmittelextraktionsschritt, bei dem Kobalt selektiv aus der Neutralisationslösung in ein Extraktionslösungsmittel extrahiert wird, das eine Monothiophosphinsäureverbindung als ein Extraktionsmittel enthält,
dargestellt durch die allgemeine Formel (1):
R₁R₂PSOH (1)
wobei R₁ und R₂, welche die gleichen oder verschieden sein können, unabhängig Kohlenwasserstoff mit gegebenenfalls einem Substituenten darstellen
durch Inkontaktbringen des Extraktionslösungsmittels mit der Neutralisationslösung;
**dadurch gekennzeichnet, dass**
in dem Laugungsschritt die Menge der Schwefelsäure nicht weniger als 50 Gew-% und nicht mehr als 80 Gew.-% des Gewichts des Oxiderzes beträgt; und
zwischen dem Fest-Flüssig-Trennungsschritt und dem Lösungsmittelextraktionsschritt der pH des Gemisches aus der Neutralisationslösung und des Extraktionslösungsmittels auf nicht weniger als 2,5 und nicht mehr als 5,5 eingestellt wird.

2. Das Verfahren nach Anspruch 1, weiter umfassend:
vor dem Laugungsschritt, Klassifizieren des Oxiderzes in ein Oxiderz mit kleinen Partikeln und ein Oxiderz mit großen Partikeln, das Magnesium enthält;
wobei in dem Laugungsschritt Nickel und Kobalt aus dem Oxiderz mit kleinen Partikeln ausgelaugt werden und
in dem Reaktionsschritt die den Laugungsrückstand enthaltende Schwefelsäurelauge mit dem im Oxid mit großen Partikeln enthaltenden Magnesium umgesetzt wird, um einen pH einzustellen.

3. Das Verfahren nach Anspruch 1 oder 2,
wobei in dem Laugungsschritt Nickel und Kobalt aus dem Oxiderz unter zusätzlicher Verwendung eines Natriumsalzes ausgelaugt werden, um eine Nickel und Kobalt enthaltende Schwefelsäurelauge sowie einen Laugungsrückstand zu erhalten; und
in dem Reaktionsschritt der pH der Laugungsrückstand enthaltenden Schwefelsäurelauge eingestellt wird, um eine Nickel und Kobalt enthaltende Reaktionslösung sowie einen Reaktionsrückstand zu erhalten.

4. Das Verfahren nach Anspruch 3,
wobei das Natriumsalz ein in Meerwasser enthaltenes Natriumsalz ist.

5. Das Verfahren nach einem der Ansprüche 1 bis 4,
wobei R₁ und R₂ unabhängig nicht weniger als 3 und nicht mehr als 25 Kohlenstoffzahlen aufweisen.

6. Das Verfahren nach einem der Ansprüche 1 bis 5,
wobei es sich bei dem Kohlenwasserstoffrest um einen Kohlenwasserstoffrest handelt, ausgewählt aus der Gruppe bestehend aus gegebenenfalls substituiertem Cycloalkylrest, gegebenenfalls substituiertem Arylrest, gegebenenfalls substituiertem geradkettigem oder seitenkettigem Aralkylrest, geradkettigem oder seitenkettigem Alkylrest und geradkettigem oder seitenkettigem Alkenylrest.

7. Das Verfahren nach einem der Ansprüche 1 bis 6,
wobei R₁ und R₂ durch R₁ = R₂ = CH₃C(CH₂)₂CH₂CH(CH₃)CH₂ dargestellt sind.

8. Das Verfahren nach einem der Ansprüche 1 bis 7,
wobei sowohl der Laugungsschritt als auch der Reaktionsschritt bei einer Temperatur von 90°C oder höher durchgeführt werden.

9. Das Verfahren nach einem der Ansprüche 1 bis 8,
wobei sowohl der Laugungsschritt als auch der Reaktionsschritt bei einem Atmosphärendruck durchgeführt werden.

10. Das Verfahren nach einem der Ansprüche 1 bis 9,
wobei das Neutralisationsmittel eine Magnesium enthaltende Schlacke ist.

11. Das Verfahren nach einem der Ansprüche 1 bis 10,
wobei in dem Laugungsschritt außerdem ein Reduktionsmittel zum Auslaugen von Nickel und Kobalt aus dem Oxiderz zugegeben wird, um eine Nickel und Kobalt enthaltende Schwefelsäurelauge sowie einen Laugungsrest zu erhalten.

12. Das Verfahren nach Anspruch 11,
wobei das Reduktionsmittel ein Eisenpulver ist.

13. Das Verfahren nach den Ansprüchen 1 bis 12,
wobei das Extraktionslösungsmittel innerhalb des Lösungsmittelextraktionsschritts zirkuliert.

## Revendications

1. Procédé de séparation et de récupération de nickel et de cobalt à partir d'un minerai d'oxyde contenant du nickel et du cobalt, comprenant les étapes suivantes :
une étape de lixiviation où le nickel et le cobalt sont lixiviés à partir dudit minerai d'oxyde avec de l'acide sulfurique afin d'obtenir un lixiviat d'acide sulfurique contenant du nickel et du cobalt et un résidu de lixiviation ;
une étape de réaction où ledit lixiviat d'acide sulfurique contenant ledit résidu de lixiviation est mis à réagir par ajustement de pH afin d'obtenir une solution de réaction contenant du nickel et du cobalt et un résidu de réaction ;
une étape de neutralisation où ladite solution de réaction contenant ledit résidu de réaction est neutralisée avec un agent neutralisant afin d'obtenir une solution de neutralisation contenant du nickel et du cobalt et un résidu de neutralisation ;
une étape de séparation solide-liquide où ladite solution de neutralisation est séparée dudit résidu de neutralisation en utilisant un épaississant avec un floculant afin de séparer ladite solution de neutralisation et ledit résidu de neutralisation ;
une étape d'extraction au solvant où le cobalt est extrait sélectivement de ladite solution de neutralisation dans un solvant d'extraction contenant un composé acide monothiophosphinique comme agent extractant représenté par la formule générale (1):
R₁R₂PSOH (1)
où R₁ et R₂, qui peuvent être identiques ou différents, représentent indépendamment un hydrocarbure ayant facultativement un substituant par mise en contact d'un solvant d'extraction avec ladite solution de neutralisation ;
**caractérisé en ce que**
dans ladite étape de lixiviation, la quantité dudit acide sulfurique n'est pas inférieure à 50 % en poids et pas supérieure à 80 % en poids du poids dudit minerai d' oxyde ; et
entre ladite étape de séparation solide-liquide et ladite étape d'extraction au solvant, le pH du mélange de ladite solution de neutralisation et dudit solvant d'extraction est ajusté à pas moins de 2,5 et pas plus de 5,5.

2. Procédé selon la revendication 1, comprenant en outre :
avant ladite étape de lixiviation, la classification dudit minerai d'oxyde en un minerai d'oxyde à petite particule et un minerai d'oxyde à grosse particule contenant du magnésium ;
dans lequel, dans ladite étape de lixiviation, le nickel et le cobalt sont lixiviés à partir dudit minerai d'oxyde à petite particule et
dans ladite étape de réaction, ledit lixiviat d'acide sulfurique contenant ledit résidu de lixiviation est mis à réagir avec du magnésium contenu dans ledit minerai d'oxyde à grosse particule pour ajuster un pH.

3. Procédé selon la revendication 1 ou 2,
dans lequel, dans ladite étape de lixiviation, le nickel et le cobalt sont lixiviés à partir dudit minerai d'oxyde en utilisant en outre un sel de sodium afin d'obtenir un lixiviat d'acide sulfurique contenant du nickel et du cobalt et un résidu de lixiviation ; et
dans ladite étape de réaction, le pH dudit lixiviat d'acide sulfurique contenant ledit résidu de lixiviation est ajusté afin d'obtenir une solution de réaction contenant du nickel et du cobalt et un résidu de réaction.

4. Procédé selon la revendication 3,
dans lequel ledit sel de sodium est un sel de sodium contenu dans l'eau de mer.

5. Procédé selon l'une quelconque des revendications 1 à 4,
dans lequel lesdits R₁ et R₂ ont indépendamment pas moins de 3 et pas plus de 25 atomes de carbone.

6. Procédé selon l'une quelconque des revendications 1 à 5,
dans lequel ledit groupe hydrocarbure est un groupe hydrocarbure choisi dans le groupe consistant en un groupe cycloalkyle facultativement substitué, un groupe aryle facultativement substitué, un groupe aralkyle facultativement substitué à chaîne droite ou chaîne latérale, un groupe alkyle à chaîne droite ou chaîne latérale et un groupe alcényle à chaîne droite ou chaîne latérale.

7. Procédé selon l'une quelconque des revendications 1 à 6,
dans lequel lesdits R₁ et R₂ sont représentés par R₁ = R₂ = CH₃C(CH₂)₂CH₂CH(CH₃)CH₂.

8. Procédé selon l'une quelconque des revendications 1 à 7,
dans lequel à la fois ladite étape de lixiviation et ladite étape de réaction sont réalisées à une température de 90 °C ou plus.

9. Procédé selon l'une quelconque des revendications 1 à 8,
dans lequel à la fois l'étape de lixiviation et ladite étape de réaction sont réalisées à une pression atmosphérique.

10. Procédé selon l'une quelconque des revendications 1 à 9,
dans lequel ledit agent neutralisant est un laitier contenant du magnésium.

11. Procédé selon l'une quelconque des revendications 1 à 10,
dans lequel, dans ladite étape de lixiviation, un agent réducteur est en outre ajouté pour lixivier le nickel et le cobalt à partir dudit minerai d'oxyde, afin d'obtenir un lixiviat d'acide sulfurique contenant du nickel et du cobalt et un résidu de lixiviation.

12. Procédé selon la revendication 11,
dans lequel ledit agent réducteur est une poudre de fer.

13. Procédé selon les revendications 1 à 12,
dans lequel ledit solvant d'extraction circule au sein de ladite étape d'extraction au solvant.
